# EUROPÄISCHE PATENTSCHRIFT

(11) **EP 4 046 899 B1**
(45) Veröffentlichungstag und Bekanntmachung des Hinweises auf die Patenterteilung: **22.02.2023**
(21) Anmeldenummer: 21158693.8
(22) Anmeldetag: 23.02.2021
(51) Int. Cl.: B62K 3/00, B62K 15/00, B62K 25/28

(54) **ROLLER, INSBESONDERE ELEKTROROLLER**
SCOOTER, IN PARTICULAR ELECTRIC SCOOTER
TROTTINETTE, EN PARTICULIER TROTTINETTE ÉLECTRIQUE

(43) Veröffentlichungstag der Anmeldung: 24.08.2022
(73) Patentinhaber: Driveman GmbH, 58339 Breckerfeld (DE)
(72) Erfinder: Schnippering, Axel, 58553 Halver (DE); Wiegand, Andreas, 58553 Halver (DE)
(74) Vertreter: Patentanwälte Dörner & Kötter PartG mbB

(56) Entgegenhaltungen:
- WO-A1-2019/149024
- WO-A1-2019/156285
- CN-U- 202 879 720
- CN-U- 206 734 537
- CN-Y- 2 452 878
- CN-Y- 2 457 021
- KR-A- 20010 036 533
- KR-Y1- 200 175 479
- US-A1- 2003 213 633
- US-A1- 2016 137 257
- US-B1- 6 406 042

## Beschreibung

Die Erfindung betrifft einen Roller, insbesondere einen Elektroroller nach dem Oberbegriff des Patentanspruchs 1.

Mit einem Elektroantrieb versehene Roller, auch als E-Scooter bezeichnet, erfreuen sich zunehmender Beliebtheit. Diese Fahrzeuge sind kompakt ausgestaltet und durch die Möglichkeit des Umlegens der Längssäule platzsparend verstaubar. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichtes wenig Energie. Außerdem ist ihre benötigte Stellfläche um ein Vielfaches kleiner und sie sind aufgrund ihrer Zusammenfaltbarkeit einfach zu handhaben. Roller der vorgenannten Art sind beispielsweise in der EP 2 425 989 A1, der gattungsgemäße US 2003/213633 A1 sowie der WO 2019/149024 A1 beschrieben.

Um auch auf holprigen Wegen ein komfortables Fahren zu ermöglichen, ist es bekannt, die mit dem Vorderrad verbundene Lenkstange eines Elektrorollers sowie auch seine Heckschwinge mit einer Federung zu versehen. Hierzu sind beispielsweise zwei Druckfedern beidseitig des Lenkers angeordnet, oder es ist eine Druckfeder dem unteren, dem Vorderrad zugewandten Bereich des Lenkers umgebend angeordnet. Weiterhin ist bekannt, außen zwischen Rad und Lenker einen, oder auch zwei Stoßdämpfer anzuordnen, um einem Überschwingen des Elektrorollers entgegenzuwirken. Im Bereich der Heckschwinge werden vereinzelnd ebenfalls Federn und Stoßdämpfer angeordnet.

Um das Packmaß möglichst gering zu halten - Elektroroller zeichnen sich insbesondere dadurch aus, dass sie platzsparend und handlich ausgebildet sind - sind Federn und Stoßdämpfer aufgrund des geringen verfügbaren Bauraums jedoch insbesondere im Bereich der Heckschwinge unzureichend dimensioniert, um auftretende Stöße hinreichend komfortabel abzufedern.

Hier setzt die vorliegende Erfindung an. Der Erfindung liegt die Aufgabe zugrunde, einen Roller, insbesondere einen Elektroroller bereitzustellen, dessen Heckschwinge eine komfortable Federung mit Dämpfung aufweist und der dabei kompakt ausgebildet ist. Gemäß der Erfindung wird diese Aufgabe durch einen Roller mit den Merkmalen des kennzeichnenden Teils des Patentanspruchs 1 gelöst.

Mit der Erfindung ist ein Roller, insbesondere ein Elektroroller bereitgestellt, dessen Heckschwinge eine komfortable Federung mit Dämpfung aufweist und der dabei kompakt ausgebildet ist. Dadurch, dass die wenigstens eine Federung durch eine Druckfeder gebildet ist, wobei die wenigstens eine Druckfeder und der wenigstens eine Stoßdämpfer in Längsrichtung des Trittelements an diesem oder in diesem angeordnet sind, ist eine gute Dimensionierung von Druckfeder und Stoßdämpfer ohne Beeinträchtigung des Packmaßes des Rollers ermöglicht.

Dabei ist an dem Trittelement wenigstens ein Standrohr befestigt, in dem jeweils eine Druckfeder zwischen einer ersten verschiebbaren Federaufnahme und einer zweiten, ortsfesten Federaufnahme vorgespannt positioniert ist, wobei die erste Federaufnahme mit einer aus dem Standrohr herausragenden Schubstange verbunden ist, die mit der Hinterradschwinge verbunden ist. Hierdurch ist eine geführte Federbewegung in Längsrichtung des Trittelements erzielt. Bevorzugt ist die Druckfeder als Schraubenfeder ausgeführt.

Weiterhin ist die Schubstange durch die zweite Federaufnahme geführt. Die zweite Federaufnahme weist vorzugsweise einen becherförmigen Federkorb auf, in dem die Druckfeder angeordnet ist. Hierdurch ist eine kompakte Anordnung ermöglicht.

In weiterer Ausgestaltung der Erfindung weist die zweite Federaufnahme ein Außengewinde auf, das mit einem Innengewinde des Standrohrs im Eingriff ist, und bereichsweise aus dem jeweiligen Standrohr hinausragt, wodurch die axiale Position der zweiten Federaufnahme innerhalb des Standrohrs verstellbar ist. Hierdurch ist die Federspannung der Druckfeder einstellbar.

Die Angabe "ortsfeste Federaufnahme" ist in diesem Zusammenhang als Zustand im Betrieb zu verstehen. Die zweite Federaufnahme ist folglich insoweit ortsfest, solange ihre Position nicht gerade zur Verstellung der Federvorspannung verändert wird. Es sind folglich unterschiedliche, ortsfeste Positionen der zweiten Federaufnahme möglich.

In Weiterbildung der Erfindung weist der aus dem jeweiligen Standrohr herausragendende Teil der zweiten Federaufnahme einen Werkzeugeingriff auf, der vorzugsweise radial eingebrachte Bohrungen umfasst. Hierdurch ist die Einstellung der Vorspannung der Druckfeder durch axiale Verstellung der zweiten Federaufnahme erleichtert. Besonders bevorzugt ist die zweite Federaufnahme mit einer Skala versehen, auf der die jeweils eingestellte Federvorspannung ablesbar ist.

In Ausgestaltung der Erfindung ist in dem wenigstens einen Standrohr jeweils ein Stoßdämpfer angeordnet, der einen in dem Standrohr festgelegten Zylinder mit einem darin verschiebbaren Kolben umfasst, dessen Kolbenstange mit der ersten Federaufnahme verbunden ist. Hierdurch ist eine kompakte, hintereinander positionierte Anordnung von Druckfeder und Stoßdämpfer erzielt.

In weiterer Ausgestaltung der Erfindung ist das wenigstens eine Standrohr aus einem ersten, federseitigen Teilrohr und einem zweiten, dämpferseitigen Teilrohr gebildet, welche beiden Teilrohre über ein Verbindungsstück miteinander lösbar verbunden sind. Hierdurch ist eine einfache Montage der in dem Standrohr angeordneten Bauteile ermöglicht. Vorzugsweise sind die beiden Teilrohre mit dem Verbindungsstück verschraubt. Hierzu ist das Verbindungsstück bevorzugt an seinen beiden Enden jeweils mit einem Außengewinde versehen, auf dass jeweils ein Teilrohr mit einem hierzu angeordneten Innengewinde aufgeschraubt ist.

In Weiterbildung der Erfindung ist das Verbindungsstück als Nabe ausgebildet, in der ein Verbindungszylinder verschiebbar gelagert ist, über den die Kolbenstange des Stoßdämpfers mit der ersten Federaufnahme verbunden ist. Hierdurch ist eine gute axiale Führung der aus Kolbenstange, Verbindungszylinder und Schubstange gebildeten Anordnung erzielt.

In Ausgestaltung der Erfindung sind die Schubstange, die erste Federaufnahme und der Verbindungszylinder jeweils eines Standrohres durch Abschnitte einer einzigen Welle gebildet. Hierdurch ist die Stabilität dieser Anordnung erhöht. Die Kolbenstange kann endseitig ein Außengewinde aufweisen, mit dem sie in eine Innengewindebohrung des Verbindungszylinders eingeschraubt ist.

In weiterer Ausgestaltung der Erfindung ist die erste Federaufnahme durch einen zylindrischen Absatz gebildet, dessen Außendurchmesser im Wesentlichen dem Innendurchmesser des Standrohres entspricht und der an einer Anschlagstellung an dem Verbindungsstück oder einem an diesem anliegenden Dichtelement anliegt. Hierdurch ist eine definierte, geführte Bewegung der ersten Federaufnahme erzielt. Dabei ist die erste Federaufnahme bevorzugt in Form eines gegenüber dem Verbindungszylinder durchmessererweiterten Abschnitts ausgebildet.

In Weiterbildung der Erfindung weist die Hinterradschwinge zwei gegenüberliegend angeordnete Schenkel auf, wobei an dem Trittelement an seinen beiden Längsseiten jeweils eines der Standrohre angeordnet ist, wobei jeweils ein Schenkel der Hinterradschwinge über einen Kniehebel mit der aus einem Standrohr herausragenden Schubstange verbunden ist. Hierdurch ist eine Transformation der Kippbewegung der Hinterradschwinge in eine translatorische Bewegung der in den beiden Standrohren verschiebbar angeordneten Schubstangen bewirkt.

In Ausgestaltung der Erfindung sind die beiden Kniehebel jeweils aus zwei schwenkbar miteinander verbundenen Hebeln gebildet, wobei der erste Hebel mit der Hinterradschwinge schwenkbar verbunden ist und der zweite Hebel mit der Schubstange schwenkbar verbundenen ist und wobei der zweite Hebel um eine an dem Trittelement befestigte Achse schwenkbar ist. Durch das Verhältnis der Längen der beiden Hebel der Kniehebel ist eine definierte Übersetzung der Kippbewegung der Hinterradschwinge in die translatorische Bewegung der beiden Schubstangen erzielt. Dabei sind die zweiten Hebel der beiden Kniehebel bevorzugt um eine gemeinsame an dem Trittelement befestigte Achse schwenkbar, über die sie verbunden sind.

In weiterer Ausgestaltung der Erfindung ist der zweite Hebel jeweils eines Kniehebels mit einem Anschlussstück schwenkbar verbunden, das ein Innengewinde aufweist, mit dem es auf ein endseitig an der Schubstange vorhandenes Außengewinde aufgeschraubt ist. Hierdurch ist die Montage vereinfacht. Vorteilhaft ragt die zweite Federaufnahme bereichsweise aus dem jeweiligen Standrohr hinaus und weist an ihrem außerhalb des Standrohrs befindlichen Ende einen innendurchmessererweiterten Abschnitt auf, der mit der Schubstange einen Ringspalt begrenzt, in dem das Anschlussstück in einer Anschlagposition eingreift.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

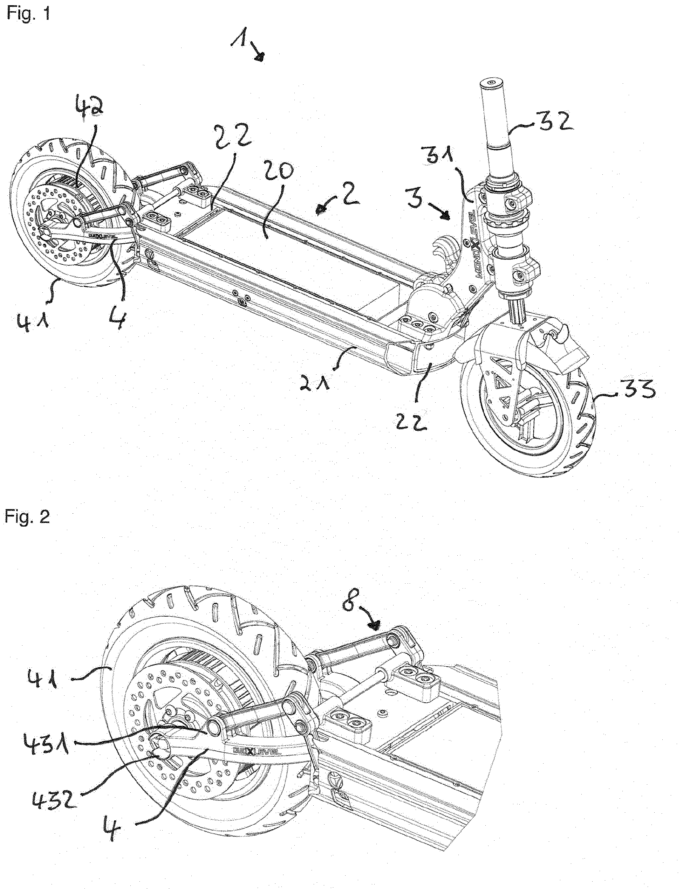

- Figur 1: die räumliche Darstellung eines Elektrorollers (ohne Lenker);
- Figur 2: die Detaildarstellung der Heckschwinge des Elektrorollers aus Figur 1;

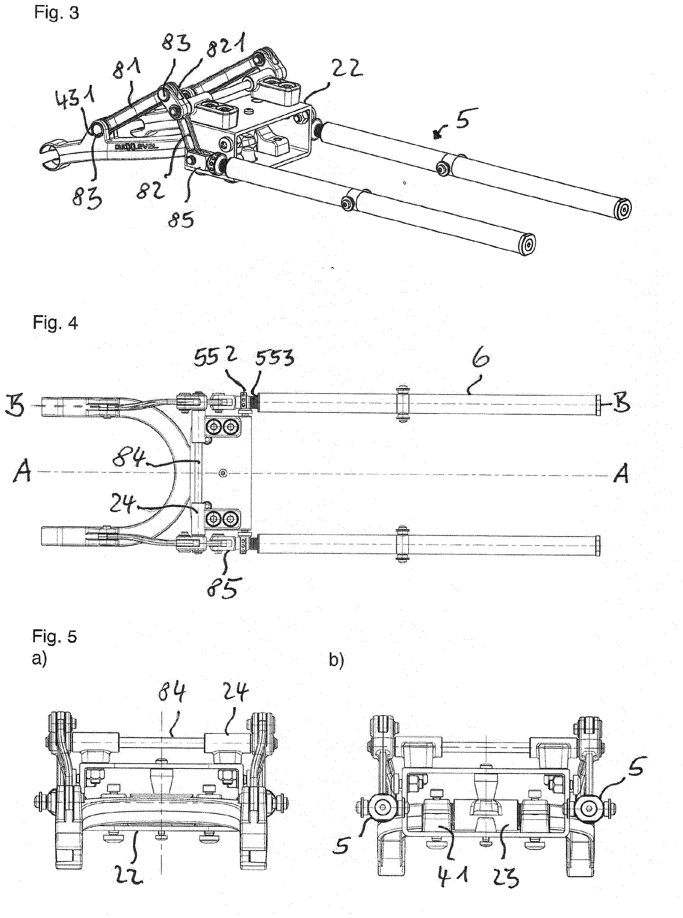

- Figur 3: die Darstellung der Heckschwinge des Elektrorollers aus Figur 1 mit angeordneter Feder-Stoßdämpfer-Einheit;
- Figur 4: die Darstellung der Heckschwinge mit Feder-Stoßdämpfer-Einheit aus Figur 3 in der Draufsicht;
- Figur 5: die Darstellung der Heckschwinge mit Feder-Stoßdämpfer-Einheit aus Figur 3 a) in der Ansicht von hinten; b) in der Ansicht von vorne;

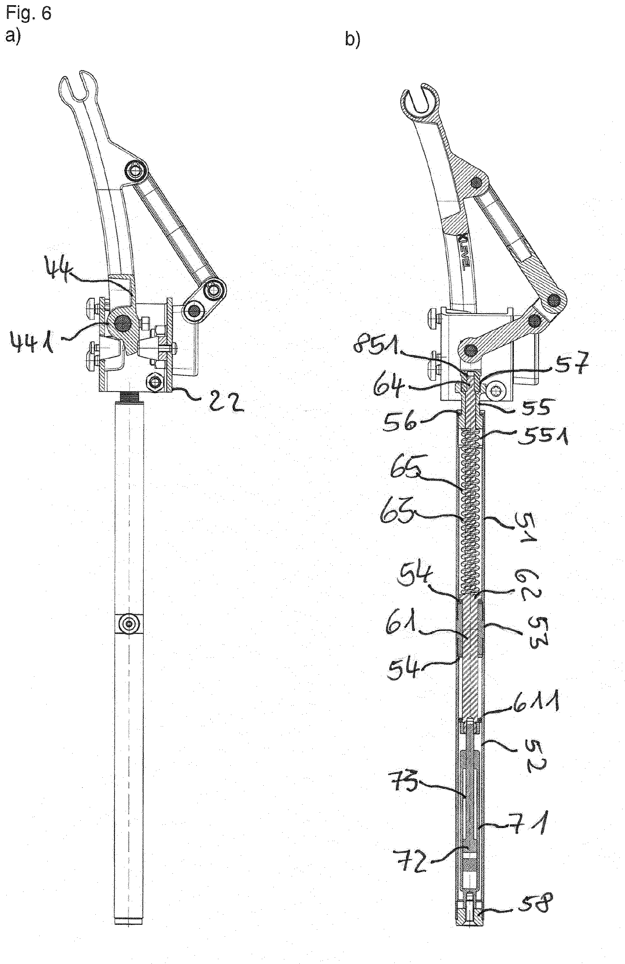

- Figur 6: die Darstellung der Heckschwinge mit Feder-Stoßdämpfer-Einheit aus Figur 4 a) im Längsschnitt A-A; b) im Längsschnitt B-B.

Der als Ausführungsbeispiel gewählte Elektroroller 1 umfasst ein Trittelement 2, das in bekannter Art und Weise über eine arretierbare Schwenkvorrichtung 3 mit einer Rahmenstrebe 31 verbunden ist, in der eine Lenkstange 32 drehbar gelagert ist, die an einer Seite mit einem Vorderrad 33 sowie an der diesen gegenüberliegenden Seite mit einem - nicht dargestellten - Lenker versehen ist. Die Lenkstange 32 kann über die arretierbare Schwenkvorrichtung 3 in eine im Wesentlichen zum Trittelement 2 parallele Position verschwenkt werden. Das Trittelement 2 ist heckseitig über eine Hinterradschwinge 4 mit einem Hinterrad 41 verbunden. Das Hinterrad 41 ist mit einem Elektromotor 42 verbunden, der über einen Akkumulator 20 gespeist ist, der von dem Trittelement 2 aufgenommen ist.

Das Trittelement 2 umfasst im Ausführungsbeispiel zwei Seitenprofile 21, die an ihren Enden über je ein zwischen diesen angeordnetes Querprofil 22 miteinander verbunden sind. Die Seitenprofile 21 und die Querprofile 22 sind als Hohlprofile mit im Wesentlichen rechteckförmigen Querschnitt ausgebildet. Der durch die Seitenprofile 21 und die Querprofile 22 gebildete, rechteckige Rahmen ist auf seiner Unterseite mit einem - nicht dargestellten - Boden versehen, auf dem der Akkumulator 20 angeordnet ist. Auf seiner Oberseite ist der Rahmen durch einen - nicht dargestellten - Deckel verschlossen.

Die Hinterradschwinge 4 ist im Wesentlichen U-förmig ausgebildet und weist zwei gegenüberliegend angeordnete Schenkel 43 auf, die endseitig in eine Achsaufnahme 432 für das Hinterrad 41 münden. Mittig weist die Hinterradschwinge 4 an ihrer den Schenkeln 43 entgegengerichteten Seite ein Anschlagteil 44 mit zwei beabstandet zueinander angeordneten Buchsen 441 auf, die beidseitig einer in dem heckseitigen Querprofil 22 des Trittelements 2 vorhandene Buchse 23 angeordnet sind, mit der sie über eine durch diese geführte Achse 24 ein Scharnier ausbilden, über das die Hinterradschwinge 4 schwenkbar mit dem Querprofil 22 des Trittelements 2 verbunden ist.

Von den Seitenprofilen 21 des Trittelements 2 ist jeweils ein Standrohr 5 aufgenommen, die das aus einem ersten Teilrohr 51 und einem zweiten Teilrohr 52 gebildet ist, welche Teilrohre 51, 52 über ein Verbindungsstück 53 verbunden sind. Hierzu weisen die Teilrohre 51, 52 jeweils endseitig ein Innengewinde auf, mit dem Sie jeweils auf ein endseitig an dem Verbindungsstück 53 vorhandenes Außengewinde aufgeschraubt sind. Das Verbindungsstück 53 weist einen gegenüber den Teilrohren 51, 52 geringeren Innendurchmesser auf, wodurch in dem Standrohr 5 Anschläge 54 gebildet sind.

In den beiden identisch ausgebildeten Standrohren 5 ist eine Welle 6 angeordnet, die aus drei Funktionsabschnitten untergliedert ist. Durch einen ersten zylindrischen Abschnitt ist ein Verbindungszylinder 61 gebildet, an den sich ein zweiter, durchmessererweiterter Abschnitt anschließt, der die erste Federaufnahme 62 ausbildet. Die erste Federaufnahme 62 geht in einen dritten, durchmesserreduzierten zylindrischen Abschnitt über, der die Schubstange 63 bildet, an die endseitig ein Gewindestift 64 angeformt ist. Die Welle 6 ist mit dem Verbindungszylinder 61 in dem als Nabe ausgebildeten Verbindungsstück 53 verschiebbar gelagert, wobei die erste Federaufnahme 62 in einer Position in einer Anschlagstellung an einem Anschlag 54 des Verbindungsstücks 53 anliegt. Zur Anschlagdämpfung sind die Anschläge 54 mit einer Dämpfungsschicht versehen, die im Ausführungsbeispiel aus einem thermoelastischen Kunststoff gebildet ist.

Auf die Schubstange 63 ist eine Schraubenfeder 65 aufgeschoben, die an der ersten Federaufnahme 62 anliegt, sowie eine zweite Federaufnahme 55, die an der Schraubenfeder 65 anliegt. Die zweite Federaufnahme 55 ist hülsenförmig ausgebildet und weist endseitig einen Federkorb 551 auf, von dem die Schraubenfeder 65 aufgenommen ist. Im Anschluss an den Federkorb 551 ist in die zweite Federaufnahme 55 ein Außengewinde eingebracht, mit dem sie in ein endseitig in dem ersten Teilrohr 51 angeordnetes Innengewinde eingeschraubt ist. An das Außengewinde schließt sich eine umlaufende Einbuchtung an, mit der die zweite Federaufnahme 55 einen Verschlussring 56 durchdringt, der endseitig an dem ersten Teilrohr 51 angebracht ist. Zur Montage ist der Verschlussring 56 im Ausführungsbeispiel aus zwei Ringhälften zusammengesetzt. An seinem dem Federkorb 551 entgegengesetzten, außerhalb des ersten Teilrohres 51 angeordneten Ende ist die zweite Federaufnahme 55 mit einem Werkzeugeingriff 552 versehen, der durch umlaufend angeordnete radiale Sackbohrungen gebildet ist. Innen ist im Bereich des Werkzeugeingriffs 552 ein innendurchmessererweiterter Abschnitt angeordnet, der zusammen mit der durch die zweite Federaufnahme 55 geführten Schubstange 63 einen Ringspalt 57 begrenzt. Durch Drehung der zweiten Federaufnahme 55 ist die Vorspannung der Schraubenfeder 65 einstellbar. Hierzu ist außen auf der zweiten Federaufnahme 55 vor dem Werkzeugeingriff 552 eine Skalierung 553 eingebracht, auf der die jeweils eingestellte Federvorspannung ablesbar ist.

An seinem dem Verschlussring 56 gegenüberliegenden Ende ist in das zweite Teilrohr 52 des Standrohrs 5 ein Stoßdämpfer 7 eingebracht, dessen Zylinder 71 über eine Schraube befestigt ist, die durch einen das zweite Teilrohr 52 endseitig verschließenden Stopfen 58 geführt ist. In dem Zylinder 71 des Stoßdämpfers 7 ist ein Kolben 72 verschiebbar geführt, dessen Kolbenstange 73 mit seinem endseitig vorhandenen Außengewinde in eine an dem freien Ende des Verbindungszylinders 61 der Welle 6 eingebrachte Gewindesackbohrung eingeschraubt ist, wodurch die Kolbenstange 73 mit der Welle 6 verbunden ist. An diesem Ende ist außen auf den Verbindungszylinder 61 ein Sprengring 611 befestigt, der in einer Anschlagposition des Verbindungszylinders 61 an dem diesem zugewandten Anschlag 54 des Verbindungsstücks 53 anliegt. Die axiale Bewegung des Verbindungszylinders 61 in dem als Nabe ausgebildeten Verbindungsstück 53 ist somit einerseits durch die erste Federaufnahme 61 und andererseits durch den Sprengring 611 begrenzt.

Jeweils ein Schenkel 43 der Hinterradschwinge 4 ist über einen Kniehebel 8 mit der Welle 6 des mit diesem auf derselben Seite angeordneten Standrohrs 5 verbunden. Die beiden Kniehebel 8 sind jeweils durch zwei schwenkbar miteinander verbundenen Hebel 81, 82 gebildet. Der erste, längere Hebel 81 ist mit seinem ersten Ende schwenkbar mit einer an dem jeweiligen Schenkel 43 der Hinterradschwinge 4 angeordneten, U-förmigen Lasche 431 verbunden , in die er eingreift und mit dieser über einen Achsbolzen 83 verbunden ist. Mit seinem zweiten Ende ist der erste Hebel 81 mit dem zweiten, kürzeren Hebel 82 wiederum über einen Achsbolzen 83 verbunden. Hierzu weist der zweite Hebel 82 eine schlitzförmige Ausnehmung 821 auf, in die der erste Hebel 81 eingreift.

Beabstandet zu der Ausnehmung 821 sind die zweiten Hebel 82 der beiden Kniehebel 8 mit einer Durchführung versehen, durch die jeweils ein Ende einer gemeinsamen Achswelle 84 geführt ist und durch welche die beiden Kniehebel 8 miteinander verbunden sind. Die Achswelle 84 ist in zwei beabstandet zueinander auf dem heckseitigen Querprofil 22 befestigten Buchsen 24 drehbar gelagert. An dem freien Ende des zweiten Hebels 82 der Kniehebel 8 ist ein Anschlussstück 85 schwenkbar befestigt, das eine Schraubhülse 851 aufweist, die auf den Gewindestift 64 der Welle 6 des zugeordneten Standrohrs 5 aufgeschraubt ist. Die Schraubhülse 851 ist in einer Anschlagposition von dem zwischen dem innendurchmessererweitertern Abschnitt der zweiten Federaufnahme 55 und der durch diese geführten Schubstange 63 begrenzten Ringspalt 57 aufgenommen.

## Patentansprüche

1. Roller, insbesondere Elektroroller (1), mit einem Trittelement (2), das heckseitig schwenkbar mit einer Hinterradschwinge (4) zur Aufnahme eines Hinterrades (41) verbunden ist, wobei das Trittelement (2) und die Hinterradschwinge (4) zur Abfederung von Stößen mit wenigstens einer Federung und wenigstens einem Stoßdämpfer (7) verbunden sind, wobei die wenigstens eine Federung durch eine Druckfeder (65) gebildet ist, wobei die wenigstens eine Druckfeder (65) und der wenigstens eine Stoßdämpfer (7) in Längsrichtung des Trittelements (2) an diesem oder in diesem angeordnet sind, **dadurch gekennzeichnet, dass** an dem Trittelement (2) wenigstens ein Standrohr (5) befestigt ist, in dem jeweils eine Druckfeder (65) zwischen einer ersten verschiebbaren Federaufnahme (62) und einer zweiten ortsfesten Federaufnahme (55) vorgespannt positioniert ist, wobei die erste Federaufnahme (62) mit einer aus dem Standrohr (5) herausragenden Schubstange (63) verbunden ist, die mit der Hinterradschwinge (4) verbunden ist, wobei die Schubstange (63) durch die zweite Federaufnahme (55) geführt ist.

2. Roller nach Anspruch 1, **dadurch gekennzeichnet, dass** die zweite Federaufnahme (55) einen becherförmigen Federkorb (551) aufweist, in dem die Druckfeder (65) angeordnet ist.

3. Roller nach Anspruch 1 oder 2, **dadurch gekennzeichnet, dass** die zweite Federaufnahme (55) ein Außengewinde aufweist, das mit einem Innengewinde des Standrohrs (5) im Eingriff ist, und bereichsweise aus dem jeweifigen Standrohr (5) hinausragt, wodurch die axiale Position der zweiten Federaufnahme (55) innerhalb des Standrohrs (5) verstellbar ist.

4. Roller nach Anspruch 3 **dadurch gekennzeichnet, dass** der aus dem jeweiligen Standrohr (5) herausragenden Teil der zweiten Federaufnahme (55) einen Werkzeugeingriff (552) aufweist, der vorzugsweise radial eingebrachte Bohrungen umfasst.

5. Roller nach einem der Ansprüche 1 bis 4, **dadurch gekennzeichnet, dass** in dem wenigstens einen Standrohr (5) jeweils ein Stoßdämpfer (7) angeordnet ist, der einen in dem Standrohr (5) festgelegten Zylinder (71) mit einem darin verschiebbaren Kolben (72) umfasst, dessen Kolbenstange (73) mit der ersten Federaufnahme (62) verbunden ist.

6. Roller nach Anspruch 5, **dadurch gekennzeichnet, dass** das wenigstens eine Standrohr (5) aus einem ersten, federseitigen Teilrohr (51) und einem zweiten, dämpferseitigen Teilrohr (52) gebildet ist, welche beiden Teilrohre (51, 52) über ein Verbindungsstück (53) miteinander lösbar verbunden, vorzugsweise verschraubt sind.

7. Roller nach Anspruch 6, **dadurch gekennzeichnet, dass** das Verbindungsstück (53) als Nabe ausgebildet ist, in der ein Verbindungszylinder (61) verschiebbar gelagert ist, über den die Kolbenstange (73) des Stoßdämpfers (7) mit der ersten Federaufnahme (62) verbunden ist.

8. Roller nach Anspruch 7, **dadurch gekennzeichnet, dass** die Kolbenstange (73) endseitig ein Außengewinde aufweist, mit dem sie in eine Innengewindebohrung des Verbindungszylinders (61) eingeschraubt ist und/oder dass die Schubstange (63), die erste Federaufnahme (62) und der Verbindungszylinder (61) jeweils eines Standrohres (5) durch Abschnitte einer einzigen Welle (6) gebildet sind.

9. Roller nach einem der Ansprüche 6 bis 8, **dadurch gekennzeichnet, dass** die erste Federaufnahme (62) durch einen zylindrischen Absatz gebildet ist, dessen Außendurchmesser im Wesentlichen dem Innendurchmesser des Standrohres (5) entspricht und der an einer Anschlagstellung an dem Verbindungsstück (53) oder einem an diesem anliegenden Dichtelement anliegt.

10. Roller nach einem der Ansprüche 1 bis 9, **dadurch gekennzeichnet, dass** die Hinterradschwinge (4) zwei gegenüberliegend angeordnete Schenkel (43) aufweist, wobei an dem Trittelement (2) an seinen beiden Längsseiten jeweils eines der Standrohre (5) angeordnet ist, wobei jeweils ein Schenkel (43) der Hinterradschwinge (4) über einen Kniehebel (8) mit der aus einem Standrohr (5) herausragenden Schubstange (63) verbunden ist.

11. Roller nach Anspruch 10, **dadurch gekennzeichnet, dass** die beiden Kniehebel (8) jeweils aus zwei schwenkbar miteinander verbundenen Hebeln (81, 82) gebildet sind, wobei der erste Hebel (81) mit der Hinterradschwinge (4) schwenkbar verbunden ist und der zweite Hebel (82) mit der Schubstange (63) schwenkbar verbundenen ist und wobei der zweite Hebel (82) um eine an dem Trittelement (2) befestigte Achse schwenkbar ist.

12. Roller nach Anspruch 11, **dadurch gekennzeichnet, dass** die zweiten Hebel (82) der beiden Kniehebel (8) um eine gemeinsame an dem Trittelement befestigte Achswelle (84) schwenkbar sind, über die sie verbunden sind.

13. Roller nach Anspruch 11 oder 12, **dadurch gekennzeichnet, dass** der zweite Hebel (82) jeweils eines Kniehebels (8) mit einem Anschlussstück (85) schwenkbar verbunden ist, das ein Innengewinde aufweist, mit dem es auf ein endseitig an der Schubstange (63) vorhandenes Außengewinde aufgeschraubt ist.

14. Roller nach Anspruch 13, **dadurch gekennzeichnet, dass** die zweite Federaufnahme (55) bereichsweise aus dem jeweiligen Standrohr (5) hinausragt und an ihrem außerhalb des Standrohrs (5) befindlichen Ende einen innendurchmessererweiterten Abschnitt aufweist, der mit der Schubstange (63) einen Ringspalt (57) begrenzt, in dem das Anschlussstück (85) in einer Anschlagposition eingreift.

## Claims

1. Scooter, in particular electric scooter (1), having a step element (2), which is pivotably connected at the rear to a rear swing arm (4) for receiving a rear wheel (41), wherein the step element (2) and the rear swing arm (4) are connected to at least one suspension and at least one shock absorber (7) in order to absorb shocks, wherein the at least one suspension is formed by a compression spring (65), wherein the at least one compression spring (65) and the at least one shock absorber (7) are arranged in the longitudinal direction of the step element (2) on or in the latter, **characterised in that** at least one standpipe (5) is fastened to the step element (2), in each of which standpipes a compression spring (65) is positioned in a prestressed manner between a first displaceable spring receptacle (62) and a second stationary spring receptacle (55), wherein the first spring receptacle (62) is connected to a push rod (63) projecting from the standpipe (5), which is connected to the rear swing arm (4), wherein the push rod (63) is guided through the second spring receptacle (55).

2. Scooter according to claim 1, **characterised in that** the second spring receptacle (55) has a cup-shaped spring cage (551), in which the compression spring (65) is arranged.

3. Scooter according to claim 1 or 2, **characterised in that** the second spring receptacle (55) has an external thread, which engages with the internal thread of the standpipe (5) and projects in part from the respective standpipe (5), whereby the axial position of the second spring receptacle (55) within the standpipe (5) is adjustable.

4. Scooter according to claim 3, **characterised in that** the part of the second spring receptacle (55) projecting from the respective standpipe (5) has a tool engagement (552), which preferably comprises radially inserted bores.

5. Scooter according to one of claims 1 to 4, **characterised in that** in the at least one standpipe (5) in each case a shock absorber (7) is arranged, which comprises a cylinder (71) with a piston (72) displaceable therein, which is fixed in the standpipe (5) and the piston rod (73) of which piston is connected to the first spring receptacle (62).

6. Scooter according to claim 5, **characterised in that** the at least one standpipe (5) is formed from a first spring-side part pipe (51) and a second shock absorber-side part pipe (52), which two part pipes (51, 52) are detachably connected, preferably screwed, to one another via a connecting piece (53).

7. Scooter according to claim 6, **characterised in that** the connecting piece (53) is designed as a hub, in which a connecting cylinder (61) is displaceably mounted, via which the piston rod (73) of the shock absorber (7) is connected to the first spring receptacle (62).

8. Scooter according to claim 7, **characterised in that** the piston rod (73) has an external thread at the end, by means of which it is screwed into an internally threaded bore of the connecting cylinder (61) and/or **in that** the push rod (63), the first spring receptacle (62) and the connecting cylinder (61) of a standpipe (5) in each case are formed by sections of a single shaft (6).

9. Scooter according to one of claims 6 to 8, **characterised in that** the first spring receptacle (62) is formed by a cylindrical shoulder, the outer diameter of which substantially corresponds to the inner diameter of the standpipe (5) and which bears against the connecting piece (53) or a sealing element bearing against the latter in a stop position.

10. Scooter according to one of claims 1 to 9, **characterised in that** the rear swing arm (4) has two oppositely arranged limbs (43), wherein one of the standpipes (5) is arranged on each of the two longitudinal sides of the step element (2), wherein one limb (43) of the rear swing arm (4) is connected via a toggle lever (8) to the push rod (63) projecting from one standpipe (5).

11. Scooter according to claim 10, **characterised in that** the two toggle levers (8) are each formed by two pivotably interconnected levers (81, 82), wherein the first lever (81) is pivotably connected to the rear swing arm (4) and the second lever (82) is pivotably connected to the push rod (63) and wherein the second lever (82) is pivotable about an axle fixed to the step element (2).

12. Scooter according to claim 11, **characterised in that** the second levers (82) of the two toggle levers (8) are pivotable about a common axle shaft (84) fixed to the step element, via which they are connected.

13. Scooter according to claim 11 or 12, **characterised in that** the second lever (82) of each toggle lever (8) is pivotably connected to a connecting piece (85), which has an internal thread, by means of which it is screwed onto an external thread provided at the end on the push rod (63).

14. Scooter according to claim 13, **characterised in that** the second spring receptacle (55) partially protrudes from the respective standpipe (5) and, at its end located outside the standpipe (5), has an inner diameter-widened section which, together with the push rod (63), delimits an annular gap (57), in which the connecting piece (85) engages in a stop position.

## Revendications

1. Trottinette, en particulier trottinette électrique (1), comprenant un élément repose-pieds (2) relié à l'arrière de façon pivotante avec une fourche oscillante (4) servant à recevoir une roue arrière (41), sachant que le plateau repose-pieds (2) et la fourche oscillante (4) de roue arrière sont, pour amortir les chocs, reliés avec au moins une suspension et au moins un amortisseur (7), sachant qu'au moins une suspension est formée par un ressort compressible (65), sachant qu'au moins un ressort compressible (65) et au moins un amortisseur (7) sont disposés dans le sens longitudinal du plateau repose-pieds (2), contre ce dernier ou dans ce dernier, **caractérisée en ce que** contre l'élément repose-pieds (2) est fixé au moins un tube fixe (5) dans lequel est positionné précontraint respectivement un ressort compressible (65) entre un premier logement coulissant (62) de ressort et un second logement à demeure (55) de ressort, sachant que le premier logement (62) de ressort est relié avec la barre de poussée (63) faisant saillie hors du tube fixe (5), barre de poussée qui est reliée avec la fourche oscillante (4) de roue arrière, sachant que la barre de poussée (63) est guidée par le second logement (55) de ressort.

2. Trottinette selon la revendication 1, **caractérisée en ce que** le second logement (55) de ressort présente un panier (551) en forme de gobelet dans lequel est logé le ressort compressible (65).

3. Trottinette selon la revendication 1 ou 2, **caractérisée en ce que** le second logement (55) de ressort présente un filetage extérieur engrenant avec un filetage intérieur du tube fixe (5), et faisant localement saillie hors du tube fixe (5) respectif, ce qui permet d'ajuster la position axiale du second logement (55) de ressort à l'intérieur du tube fixe (5).

4. Trottinette selon la revendication 3, **caractérisée en ce que** la partie du second logement (55) de ressort faisant saillie hors du tube fixe (5) respectif présente un moyen d'engrènement (552) d'outil comprenant des alésages ménagés de préférence radialement.

5. Trottinette selon l'une des revendications 1 à 4, **caractérisée en ce que** dans au moins un tube fixe (5) est disposé respectivement un amortisseur (7) comprenant un cylindre (71) immobilisé dans le tube fixe (5), et un piston (72) coulissant dans le cylindre, piston dont la tige (73) est reliée avec le premier logement (62) de ressort.

6. Trottinette selon la revendication 5, **caractérisée en ce qu'**au moins un tube fixe (5) est formé à partir d'un premier tube partiel (51) côté ressort et à partir d'un second tube partiel (52) côté amortisseur, lesquels deux tubes partiels (51, 52) sont via une pièce de liaison (53) reliés ensemble de façon détachable, de préférence vissés.

7. Trottinette selon la revendication 6, **caractérisée en ce que** la pièce de liaison (53) est configurée comme moyeu dans lequel un cylindre de liaison (61) est en appui coulissant, via lequel la tige (73) de piston de l'amortisseur (7) est reliée avec le premier logement (62) de ressort.

8. Trottinette selon la revendication 7, **caractérisée en ce que** la tige (73) de piston présente en son extrémité un filetage extérieur par lequel elle est vissée dans un alésage à filetage intérieur du cylindre de liaison (61) et/ou que la barre de poussée (63), le premier logement (62) de ressort et le cylindre de liaison (61) respectivement d'un tube fixe (5) sont formés par des segments d'un arbre unique (6).

9. Trottinette selon l'une des revendications 6 à 8, **caractérisée en ce que** le premier logement (62) de ressort est formé par un épaulement cylindrique, dont le diamètre extérieur correspond essentiellement au diamètre intérieur du tube fixe (5) et qui applique, sur une position de butée, contre la pièce de liaison (53) ou contre un élément d'étanchéité appliquant contre cette dernière.

10. Trottinette selon l'une des revendications 1 à 9, **caractérisée en ce que** la fourche oscillante (4) de roue arrière présente deux branches (43) disposées se faisant face, sachant que contre l'élément repose-pieds (2), sur ses deux côtés longitudinaux, est respectivement disposé l'un des tubes fixes (5), sachant que respectivement une branche (43) de la fourche oscillante (4) de roue arrière est reliée par un levier à genouillère (8) avec la barre de poussée (63) faisant saillie hors du tube fixe (5).

11. Trottinette selon la revendication 10, **caractérisée en ce que** les deux leviers à genouillère (8) sont formés respectivement par deux leviers (81, 82) reliés ensemble tout en pouvant pivoter, sachant que le premier levier (81) est relié avec la fourche oscillante (4) de roue arrière tout en pouvant pivoter, et que le second levier (82) est relié avec la barre de poussée (63) tout en pouvant pivoter et sachant que le second levier (82) peut pivoter autour d'un axe fixé contre l'élément repose-pieds (2).

12. Trottinette selon la revendication 11, **caractérisée en ce que** les seconds leviers (82) des deux leviers à genouillère (8) peuvent pivoter autour d'un arbre (84) commun, via lequel ils sont reliés, servant d'axe et fixé contre l'élément repose-pieds.

13. Trottinette selon la revendication 11 ou 12, **caractérisée en ce que** le second levier (82) respectivement d'un levier à genouillère (8) est relié avec une pièce de raccordement (85) tout en pouvant pivoter, pièce qui présente un filetage intérieur, par lequel elle est vissée contre un filetage extérieur présent sur l'extrémité de la barre de poussée (63).

14. Trottinette selon la revendication 13, **caractérisée en ce que** le second logement (55) de ressort fait localement saillie hors du tube fixe (5) respectif, et qu'il présente en son extrémité située en dehors du tube fixe (5) un segment d'un diamètre intérieur élargi, segment qui limite avec la barre de poussée (63) un interstice annulaire (57) dans lequel engrène la pièce de raccordement (85) dans une position butée.
